# EUROPEAN PATENT APPLICATION

(11) **EP 4 800 817 A1**
(43) Date of publication of application: **02.09.2026**
(21) Application number: 24884218.9
(22) Date of filing: 02.09.2024
(51) Int. Cl.: H01M 50/152

(54) **COVER PLATE ASSEMBLY FOR BATTERY, BATTERY AND ELECTRICAL APPARATUS**

(30) Priority: 01.11.2023 CN 202322957480 U
(71) Applicant: BYD Company Limited, Shenzhen, Guangdong 518118 (CN)
(72) Inventor: ZHANG, Yao, Shenzhen, Guangdong 518118 (CN); ZHANG, Da, Shenzhen, Guangdong 518118 (CN); GUO, Guannan, Shenzhen, Guangdong 518118 (CN); HUANG, Xin, Shenzhen, Guangdong 518118 (CN)
(74) Representative: Taor, Simon Edward William
(86) International application number: PCT/CN2024/116340
(87) International publication number: WO 2025/092211

(57) **Abstract**

A cover plate assembly for a battery, a battery, and an electrical apparatus. The cover plate assembly comprises a cover plate (2) and a sealing cover (1), the cover plate (2) being provided with a through hole (25) and the sealing cover (1) being arranged on the cover plate (2) so as to block the through hole (25). The sealing cover (1) is provided with a first bent portion (11), a lap joint portion (12) and a second bent portion (13), the first bent portion (11) being connected to the cover plate (2), the lap joint portion (12) being located between the first bent portion (11) and the second bent portion (13), the first bent portion (11), the lap joint portion (12) and the second bent portion (13) being sequentially connected to form a recess, and the width L of the lap joint portion (12) being not less than 0.5 mm and not greater than 1.5 mm.

## Description

### CROSS-REFERENCE TO RELATED APPLICATIONS

The present disclosure claims priority to Chinese Patent Application No. 202322957480.8 filed on November 1, 2023, entitled "COVER PLATE ASSEMBLY FOR BATTERY, BATTERY AND ELECTRIC APPARATUS", which is incorporated herein by reference in its entirety.

### FIELD

The present disclosure relates to a battery sealing apparatus, and in particular, to a cover plate assembly for a battery. In addition, the present disclosure also relates to a battery and an electric apparatus.

### BACKGROUND

With the development of science and technology, electric vehicles are increasingly widely used, and the power battery of an electric vehicle is an indispensable part of the electric vehicle, for which the sealing performance of the battery injection hole is very important

In the sealing structure of the battery injection hole in the prior art, the injection hole is arranged on a cover plate of the battery, and a sealing cover is welded to the cover plate of the battery to seal the injection hole. Since the sealing cover and the cover plate are connected by butt welding, there is a high risk of stress concentration at the weld joint here, which is prone to defects such as weld shrinkage cracks, explosions and weld holes, resulting in a low helium detection yield of the power battery sealing weld.

Therefore, how to ensure the helium detection yield of the battery sealing weld has become a technical problem to be solved urgently.

### SUMMARY

An object of the present disclosure is to provide a cover plate assembly for a battery, which can ensure the distance between the welding area and the center of the sealing cover, form a stress buffer area, and improve the helium detection yield of the sealing weld of the battery. A second object of the present disclosure is to provide a battery, and a third object of the present disclosure is to provide an electric apparatus.

To achieve the above objectives, a first aspect of the present disclosure is to provide a cover plate assembly for a battery, including:

A cover plate, a through hole is formed on the cover plate;

A sealing cover, the sealing cover is arranged on the cover plate to block the through hole; the sealing cover includes a first bent portion, a lap joint portion and a second bent portion, the first bent portion is connected to the cover plate;

The lap joint portion is located between the first bent portion and the second bent portion, the first bent portion, the lap joint portion and the second bent portion are sequentially connected to form a recess, the width L of the lap joint portion is not less than 0.5 mm and not greater than 1.5 mm.

In one embodiment, the through hole includes a mounting groove and a injection channel which are sequentially connected, and the sealing cover is mounted in the mounting groove.

In one embodiment, the cover plate assembly further includes a welding seam portion, the welding seam portion is connected to the first bent portion to connect the sealing cover and the cover plate, a shortest distance between the welding seam portion and an edge opposite to the second bent portion is N3, and N3≥L.

In one embodiment, a distance from a bottom of the weld portion to an outer bottom surface of the lap joint portion is N2, a thickness of the sealing cover is t, and N2 and t satisfy 0.5t≤N2≤t.

In one embodiment, a minimum distance from the welding seam portion to an inner side wall of a corresponding side of the injection channel is N1, and N1≥0.5 mm.

In one embodiment, N3=(h-t)*tan(γ/2)+L+(v-t)*tan(β)≥0.5t, wherein h is a height of the first bent portion, t is a thickness of the sealing cover, γ is an inclined included angle between outer side surfaces of two opposite ends of the first bent portion, v is a distance from an upper surface of an avoiding portion to an outer bottom surface of the lap joint portion, and β is a bending angle of the second bent portion.

In one embodiment, a sealing nail is sealingly mounted in the injection channel.

In one embodiment, a step structure is arranged on an outer side of the injection channel, and a transition inclined surface is arranged between the step structure and a surface of the cover plate.

In one embodiment, the mounting groove and the injection channel are connected through a rounded transition. In one embodiment, the second bent portion is arc-shaped, and a radius R2 of an inner contour curved surface thereof is twice a radius R1 of an outer contour curved surface thereof.

In one embodiment, the sealing cover further includes an avoiding portion protruding in a direction away from the through hole, and the second bent portion is arranged around the avoiding portion.

In one embodiment, a projection of the avoiding portion toward the through hole at least partially overlaps with the through hole.

In one embodiment, a distance between a side of the avoiding portion toward the through hole and a side of the lap joint portion toward the through hole is not less than 0.5 mm and not greater than 4 mm.

In one embodiment, an inclined included angle between outer side surfaces of two opposite ends of the first bent portion is γ, and 0°≤γ≤90°.

In one embodiment, the first bent portion is arranged inclined toward an inner side wall of the through hole.

In one embodiment, the second bent portion is arranged inclined in a direction away from the first bent portion.

In one embodiment, an outer bottom surface of the lap joint portion is connected to the cover plate.

A second aspect of the present disclosure provides a battery, including the cover plate assembly for a battery described above, a battery housing and an battery cell, the cover plate assembly is covered on the battery housing to form a sealed cavity, the battery cell is located in the sealed cavity.

An aspect of the present disclosure provides an electric apparatus, including the battery described above.

Through the above technical solution, the present disclosure forms a recess by sequentially connecting the first bent portion, the lap joint portion and the second bent portion, and the width L of the lap joint portion is not less than 0.5 mm and not greater than 1.5 mm, which effectively ensures the distance from the welding area to the center of the sealing cover, forms a stress buffer area, avoids stress concentration at the welding seam, and improves the helium detection yield of the battery sealing weld.

Other features and advantages of the present disclosure will be described in detail in the following detailed description.

### BRIEF DESCRIPTION OF THE DRAWINGS

In order to more clearly illustrate the technical solution in the embodiments of the present disclosure, the drawings required for the description of the embodiments or prior art will be briefly described below. Obviously, the drawings in the following description are merely some embodiments of the present disclosure and other drawings can be derived from these drawings without inventive step for a person of ordinary skill in the art.
FIG. 1 is a three-dimensional structural schematic diagram of a sealing cover in the embodiment of the present disclosure;
FIG. 2 is one of the structural schematic diagrams of a cover plate in the embodiment of the present disclosure;
FIG. 3 is one of the assembly schematic diagrams of the sealing cover and the cover plate in the embodiment of the present disclosure, where the sealing nail is in interference fit with the injection hole;
FIG. 4 is a cross-sectional schematic diagram of the sealing cover in the embodiment of the present disclosure;
FIG. 5 is a second structural schematic diagram of the cover plate in the embodiment of the present disclosure;
FIG. 6 is a structural schematic diagram of the sealing nail in the embodiment of the present disclosure;
FIG. 7 is a structural schematic diagram of the sealing cover in the embodiment of the present disclosure;
FIG. 8 is an assembly schematic diagram of the sealing cover and the cover plate in a first embodiment of the present disclosure, wherein v=t;
FIG. 9 is an assembly schematic diagram of the sealing cover and the cover plate in a second embodiment of the present disclosure, wherein t<v<h;
FIG. 10 is an assembly schematic diagram of the sealing cover and the cover plate in a third embodiment of the present disclosure, wherein v>h;
FIG. 11 is an assembly schematic diagram of the sealing cover and the cover plate in a fourth embodiment of the present disclosure, wherein β=90° and t<v <h;
FIG. 12 is an assembly schematic diagram of the sealing cover and the cover plate in a fifth embodiment of the present disclosure, wherein β=90° and v>h;
FIG. 13 is an assembly schematic diagram of the sealing cover and the cover plate in a sixth embodiment of the present disclosure, wherein β=90° and v=h;
FIG. 14 is a welding schematic diagram of the sealing cover and the cover plate in the sixth embodiment of the present disclosure;
FIG. 15 is a second assembly schematic diagram of the sealing cover and the cover plate in an embodiment of the present disclosure, wherein the sealing nail is connected to the injection hole in a countersunk head manner;
FIG. 16 is a third assembly schematic diagram of the sealing cover and the cover plate in an embodiment of the present disclosure, wherein the sealing nail is omitted in the injection hole;
FIG. 17 is a structural schematic diagram of the battery in an embodiment of the present disclosure;
FIG. 18 is a structural schematic diagram of the electric apparatus in an embodiment of the present disclosure.

Reference Numeral Description:
1: sealing cap
11: first bend portion
12: lap joint portion
13: second bend portion
14: avoiding portion
141: first surface
142: second surface
111: welding seam portion
2: cover plate
21: mounting groove
22: injection channel
23: step structure
24: transition inclined surface
25: through hole
3: sealing nail
4: cover plate assembly
5: battery
6: electric apparatus

### DETAILED DESCRIPTION

The embodiments of the present disclosure are described in detail below with reference to the accompanying drawings. It should be understood that embodiments described herein are only used to illustrate and explain the present disclosure and are not intended to limit the present disclosure.

In the description of the present disclosure, it is to be noted that unless explicitly stated and defined otherwise, the terms "mount", "arrange" or "connect" are to be broadly understood, e.g., the term "connect" may be a fixed connection, may be a detachable connection, or may be an integral connection, may be direct connection or indirect connection through an intermediary, may be a communication within the two elements or an interaction between the two elements. For a person of ordinary skill in the art, the specific meaning of the above terms in the present disclosure may be understood according to specific circumstances.

Furthermore, terms "first", "second" are used for descriptive purposes only and cannot be understood as indicating or implying relative importance or implying indicating number of indicated technical features, thus, feature qualified as "first", "second" may explicitly or implicitly include one or more of said features.

In the present disclosure, references are used based on the orientation or positional relationships shown in the drawings, and are not intended to indicate or imply that the device or element referred to must have a particular orientation, be constructed and operate in a particular orientation, and therefore cannot be construed as limiting the present disclosure; for the orientation terms of the present disclosure, it should be understood in connection with the actual installation state.

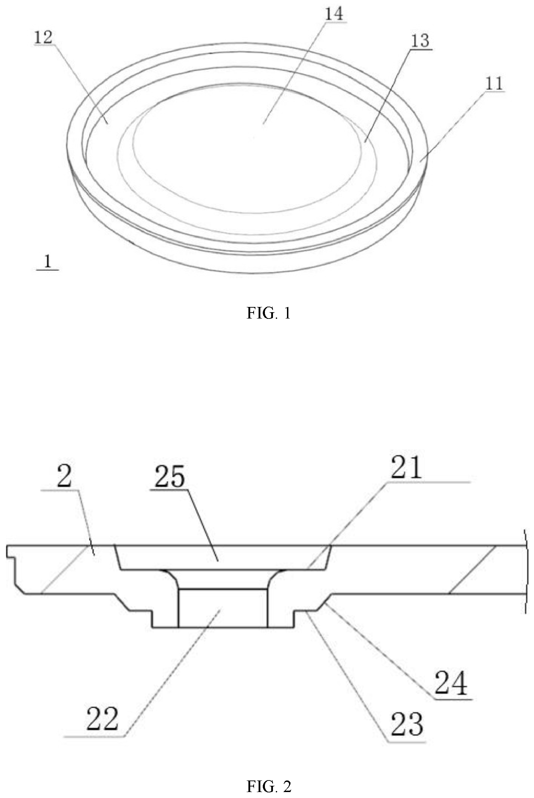

As shown in FIGS. 1 to 16, an embodiment of the present disclosure provides a cover plate assembly 4 for a battery, including:
a cover plate 2, a through hole 25 is formed on the cover plate 2;
a sealing cover 1, the sealing cover 1 is arranged on the cover plate 2 to block the through hole 25; the sealing cover 1 includes a first bent portion 11, a lap joint portion 12 and a second bent portion 13, the first bent portion 11 is connected to the cover plate 2;
the lap joint portion 12 is located between the first bent portion 11 and the second bent portion 13, the first bent portion 11, the lap joint portion 12 and the second bent portion 13 are sequentially connected to form a recess, and the width L of the lap joint portion 12 is not less than 0.5 mm and not greater than 1.5 mm.

It should be noted that there are included angle transitions between the first bent portion 11 and the lap joint portion 12 and between the second bent portion 13 and the lap joint portion 12, with the turning points of the included angles as boundaries, the part between the two boundaries is the lap joint portion 12.

Wherein the first bent portion 11, the lap joint portion 12 and the second bent portion 13 are sequentially connected to form a recess, and the width L of the lap joint portion 12 refers to the distance between the two boundaries of the first bent portion 11 and the second bent portion 13 along the radial direction of the sealing cover 1, and the width L of the lap joint portion 12 is not less than 0.5 mm and not greater than 1.5 mm, so that a certain distance is formed between the welding area and the center of the sealing cover 1, thereby forming a stress buffer area, which can exert a good flexible buffering effect on the stress at the welding seam, avoid stress concentration at the welding seam, and improve the helium detection yield of the battery sealing weld.

In some embodiments, the first bent portion 11 is arranged inclined toward an inner side wall of the through hole 25, and the second bent portion 13 is arranged inclined in a direction away from the first bent portion 11, so that a larger stress buffer area can be obtained. The first bent portion 11 is inclined arranged toward the inner side wall of the through hole 25 to enable the sealing cover 1 laterally and elastically fit with the cover plate 2. If the incoming material size of the sealing cover 1 is close to or exceeds the upper tolerance limit, the recess areas at both ends of the sealing cover 1 can provide a fault-tolerant size space for elastic deformation, ensure size fit, and reduce the production cost of waste materials.

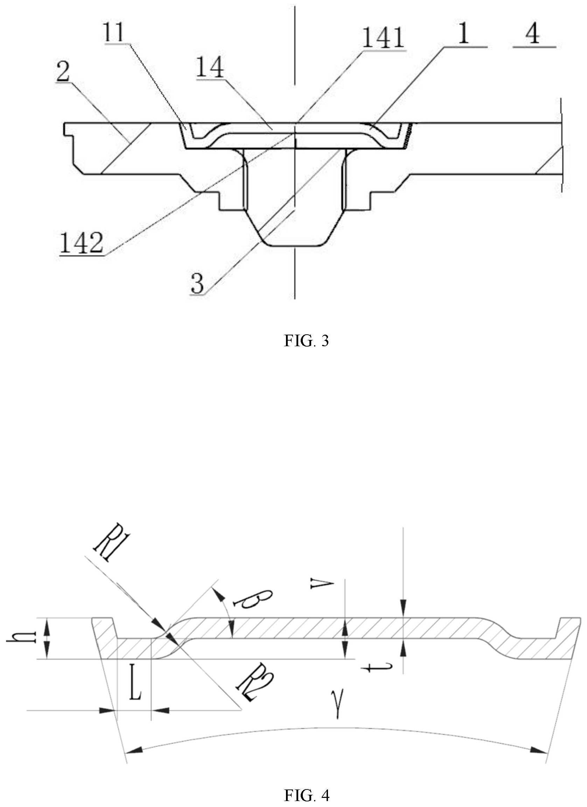

In some embodiments, as shown in FIG. 2, the through hole 25 of the cover plate 2 includes a mounting groove 21 and a injection channel 22 which are connected sequentially, and as shown in FIG. 3, the sealing cover 1 is mounted in the mounting groove 21, with the first bent portion 11 being arranged inclined toward an inner side wall of the mounting groove 21.

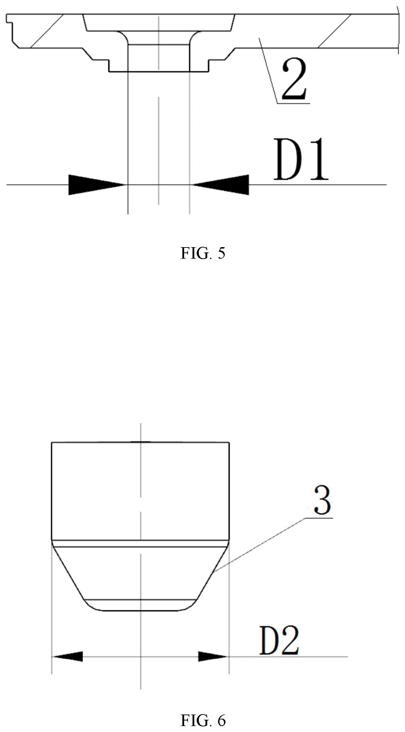

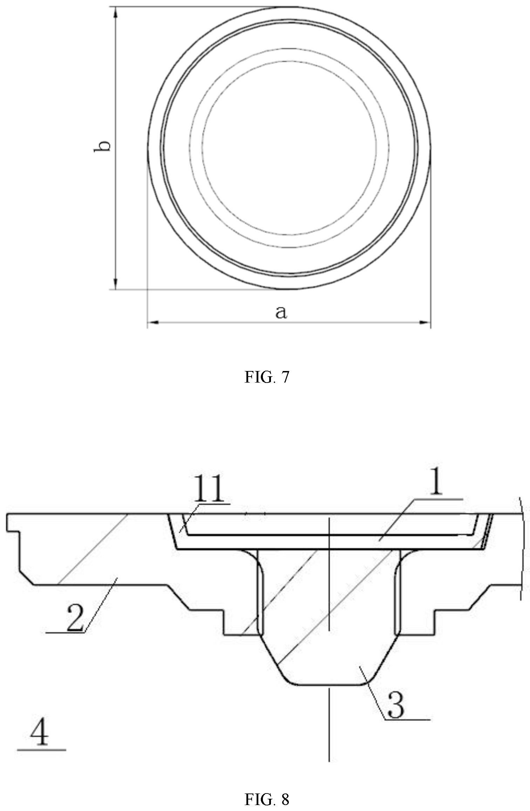

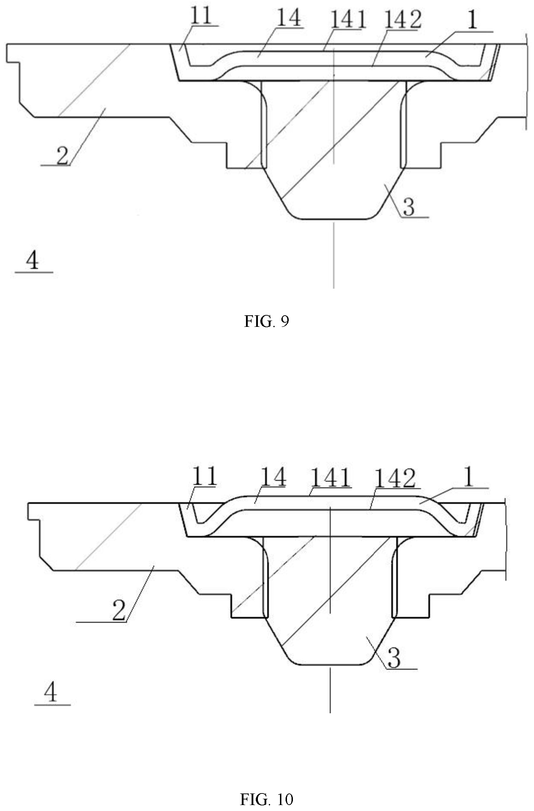

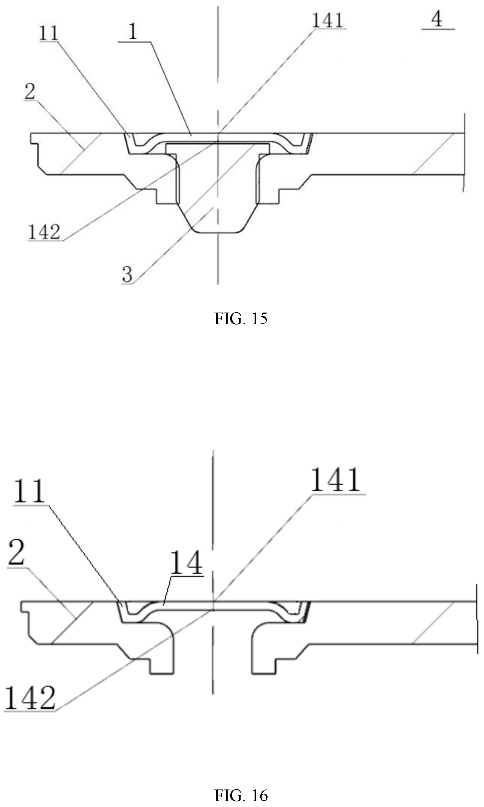

As shown in FIG. 9, the through hole 25 of the cover plate 2 can be sealed with a sealing nail 3, that is, a sealing nail 3 is sealingly mounted in the injection channel 22 to isolate the sealing cover 1 from contact with electrolyte, avoid seal failure caused by weld corrosion, and the sealing nail 3 can also prevent welding slag from falling into the battery cell during the welding process. As shown in FIG. 5, the diameter of the injection channel 22 is D1, as shown in FIG. 6, the diameter of the sealing nail 3 is D2, and as shown in FIG. 8, D2 is larger than D1, so that the sealing nail 3 is connected with the injection channel 22 in an interference fit manner to prevent the sealing nail 3 from falling into the battery cell. Compared with the prior art where the sealing cover 1 is adapted to the injection hole by butt welding with high requirements on the precision of incoming materials, and electrolyte crystals remain on the sealing cover 1 after injection, resulting in poor fit between the sealing cover 1 and the cover plate and finally a low yield of the sealing weld, as shown in FIG. 6, the bottom of the sealing nail 3 of the present disclosure adopts a connection mode of a cone and a rounded, which can avoid electrolyte residue and backflow after injection. Further, as shown in FIG. 15, a countersunk head may also be arranged on the top of the sealing nail 3, and the cover plate 2 is hung in a countersunk head manner to avoid falling into the battery cell. The material of the sealing nail 3 may be at least one of fluororubber, ethylene propylene diene monomer rubber, ethylene propylene rubber and meltablepolytetrafluoroethylene plastic.

As shown in FIG. 16, if the corrosion effect of the electrolyte on the welding seam is low, the sealing nail 3 may be omitted, and the through hole 25 of the cover plate 2 may be directly sealed by the sealing cover 1.

In some embodiments, as shown in FIGS. 2 to 4, an outer bottom surface of the lap joint portion 12 is connected to the cover plate 2. Specifically, the mounting groove 21 may be a step structure, the sealing cover 1 is mounted in the mounting groove 21, a bottom surface of the lap joint portion 12 is in contact with the bottom of the mounting groove 21, an outer side surface of the first bent portion 11 is laterally and elastically fit with an inner side wall of the mounting groove 21, a step depth of the mounting groove 21 is H, and a height of the first bent portion 11 is h, in a preferred case, H≥h, the value range of h is 0.5 mm≤h≤2mm mm, and the mounting groove 21 and the injection channel 22 are connected in a rounded transition manner. To prevent stress concentration here, a profiling design is adopted to meet the principle of uniform wall thickness, which can effectively reduce material consumption and manufacturing cost. For example, as shown in FIG. 2, a step structure 23 is arranged on an outer side of the injection channel 22, and a transition inclined surface 24 is arranged between the step structure 23 and a surface of the cover plate 2, which can effectively reduce material consumption and manufacturing cost.

Further, as shown in FIG. 4, to ensure the uniformity of wall thickness, the second bent portion 13 is arc-shaped, and the radius R2 of an inner contour curved surface of the second bent portion 13 is twice the radius R1 of an outer contour curved surface of the second bent portion 13, that is, R2=2R1.

In some embodiments, the sealing cover 1 further includes an avoiding portion 14, the avoiding portion 14 protrudes in a direction away from the through hole 25, the second bent portion 13 is arranged around the avoiding portion 14, the avoiding portion 14 is includes a first surface 141 and a second surface 142, and the first surface 141 and the second surface 142 are arranged oppositely. In the embodiment shown in FIG. 9, the first surface 141 is located on an upper surface of the sealing cover 1, the second surface 142 is located on a lower surface of the sealing cover 1, and both the first surface 141 and the second surface 142 are convexly curved upwards, as shown in FIG. 3, so that an avoiding space is formed below the second surface 142 to avoid the sealing nail 3, and a heat insulation cavity is added for welding to ensure that the sealing nail 3 is not burned during welding to affect its sealing performance.

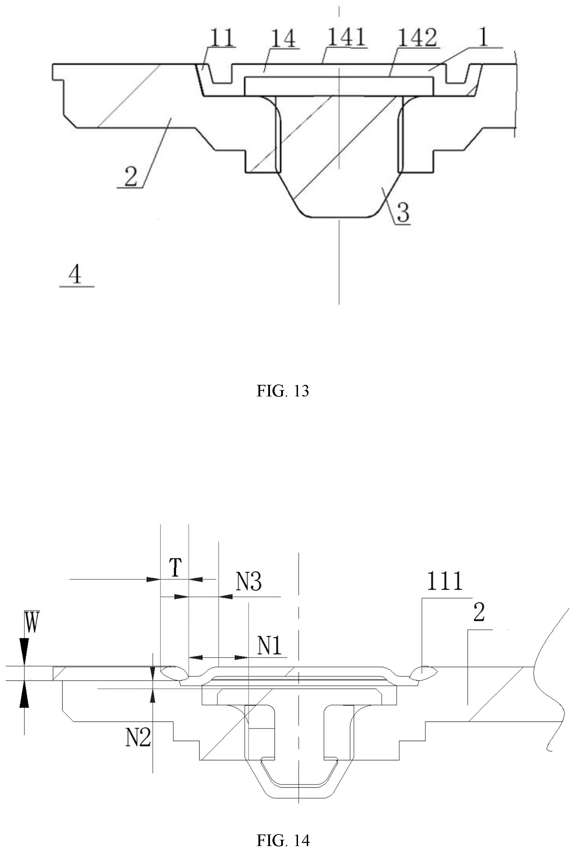

In some embodiments, as shown in FIG. 14, the cover plate assembly 4 further includes a welding seam portion 111. During welding, the first bent portion 11 and an inner side wall of the through hole 25 of the cover plate 2 form the welding seam portion 111 by the manner of the hemming welding, that is, the welding seam portion 111 is connected to the first bent portion 11, so as to realize the connection between the sealing cover 1 and the cover plate 2. A shortest horizontal linear distance from the welding seam portion 111 to the second bent portion 13 is N3, and N3≥L. In a preferred case, the shortest distance N3 between the welding seam portion 111 and an edge opposite to the second bent portion 13 is L, which can just wrap the entire the first bent portion 11. Compared with the butt welding method adopted in the prior art, this hemming welding has a wider weld width margin, makes the welding seam directly contact with air for better heat dissipation, has a lower risk of stress concentration at the welding seam, is not prone to defects of weld shrinkage cracks, explosions and weld holes, can increase the reliability of welding sealing, and can improve the helium detection yield of the sealing weld of the power battery.

Further, as shown in FIGS. 4 and 14, to prevent the avoiding portion 14 from being burned by the heat of weld width during the welding process to affect its sealing performance, the shortest distance N3 between the welding seam portion 111 and the edge opposite to the second bent portion 13 is N3=(h-t)*tan(γ/2)+L+ (v-t)*tan(β) ≥0.5t, wherein h is the height of the first bent portion 11, t is the thickness of the sealing cover 1, γ is the inclined included angle between the outer side surfaces of the two opposite ends of the first bent portion 11, v is the distance from the upper surface of the avoiding portion 14 to the outer bottom surface of the lap joint portion 12, L is the width of the lap joint portion 12 along the radial direction of the sealing cover 1, and β is the bending angle of the second bent portion 13.

In some embodiments, the inclined included angle between the outer side surfaces of the two opposite ends of the first bent portion 11 is γ, and 0°≤γ≤90°.

Furthermore, as shown in FIGS. 4 and 14, to prevent the sealing nail 3 from being burned by the heat of weld penetration during the welding process to affect the welding process capability and its structural sealing performance, the minimum distance from the welding seam portion 111 to the inner side wall of the corresponding side of the injection channel 22 is N1, and N1≥0.5 mm. The distance from the bottom of the welding seam portion 111 to the outer bottom surface of the lap joint portion 12 is N2, the thickness of the sealing cover 1 is t, and N2 and t satisfy 0.5t≤N2≤t.

During welding, FIG. 14 shows a schematic diagram of the weld between the sealing cover 1 and the cover plate 2, wherein the welding seam is a simple schematic diagram, the wild width of the welding seam T is the maximum distance between the welding seams, and to ensure the sealing performance of the welding seam, the value of the weld width T is t≤T≤4t. The depth from the surface of the welding seam to the deepest part of the welding seam is the weld penetration W, and to ensure the sealing performance of the welding seam, the value of the weld penetration W is 0.5t≤W≤2t.

In some embodiments, the projection of the avoiding portion 14 toward the through hole 25 at least partially overlaps with the through hole 25, that is, the avoiding portion 14 is directly opposite to the through hole 25, and the projection area of the avoiding portion 14 toward the through hole 25 is larger than the area of the through hole 25, or the projection area of the avoiding portion 14 toward the through hole 25 is equal to the area of the through hole 25.

Specifically, the distance from the upper surface of the avoiding portion 14 to the outer bottom surface of the lap joint portion 12 is v, the thickness of the sealing cover 1 is t, v-t represents the size of the avoiding space, and the value range of the depth of the avoiding space is 0≤v-t≤4 mm.

Further, as shown in FIG. 3, to leave a sufficient avoiding space in the height direction and avoid the welding from affecting the sealing nail 3, the distance between the side of the avoiding portion 14 toward the through hole 25 and the side of the lap joint portion 12 toward the through hole 25 is not less than 0.5 mm and not greater than 4 mm, that is, the depth of the avoiding space below the second surface 142 of the avoiding portion 14 is not less than 0.5 mm and not greater than 4 mm, which also means the value range of the difference between the distance v from the upper surface of the avoiding portion 14 to the outer bottom surface of the lap joint portion 12 and the thickness t of the sealing cover 1 is 0.5≤v-t≤4 mm.

As a specific embodiment of the sealing cover 1, in the embodiment of FIG. 8, v=t, which means the size of the avoiding space is 0. In the embodiment of FIG. 9, 0°<β<90° and t<v<h, at this time, the first surface 141 of the avoiding portion 14 is lower than the upper surface of the cover plate 2; or 0°<β<90° and t< v=h, at this time, the first surface 141 of the avoiding portion 14 is flush with the upper surface of the cover plate 2. In the embodiment of FIG. 10, 0°<β<90° and h <v, the first surface 141 of the avoiding portion 14 protrudes from the upper surface of the cover plate 2.

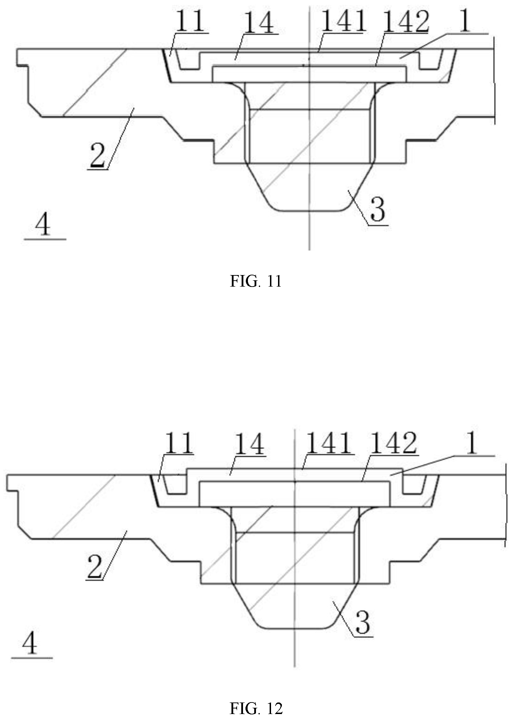

As another specific embodiment of the sealing cover 1, as shown in FIGS. 11 to 13, β=90°, that is, the bending position of the avoiding portion 14 is a right angle. Wherein, in the embodiment of FIG. 11, t<v<h, at this time, the first surface 141 of the avoiding portion 14 is lower than the upper surface of the cover plate 2; in the embodiment of FIG. 12, h<v, the first surface 141 of the avoiding portion 14 protrudes from the upper surface of the cover plate 2; in the embodiment of FIG. 13, v=h, the first surface 141 of the avoiding portion 14 is flush with the upper surface of the cover plate 2.

In some embodiments, as shown in FIG. 7, the sealing cover 1 has a long side a and a short side b. When a=b, the sealing cover 1 may be a circular structure, and the values of the long side a and the short side b can be selected according to design. When a>b, the sealing cover 1 may be an elliptical structure, the value range of the long side a is 1 mm≤a≤20 mm, the value range of the short side b is 1 mm≤b ≤20 mm, and 1≤a/b≤2.

As shown in FIGS. 3 and 14, the recess is formed by sequentially connecting the first bent portion 11, the lap joint portion 12 and the second bent portion 13, and the width L of the lap joint portion 12 along the radial direction of the sealing cover 1 is not less than 0.5 mm and not greater than 1.5 mm, which can ensure the distance from the welding area to the center of the sealing cover 1, form a stress buffer area, and avoid stress concentration at the weld joint. Moreover, the sealing cover 1 is laterally and elastically fit with the inner side wall of the through hole 25 of the cover plate 2 through the first bent portion 11. When the incoming material size of the sealing cover 1 exceeds the upper tolerance limit, the recess areas at both ends of the sealing cover 1 can provide a fault-tolerant size space for elastic deformation, ensure size fit, and reduce the production cost of waste materials. The recesses at both ends of the sealing cover 1 allow the first bent portion 11 to be connected with the inner side wall of the through hole 25 of the cover plate 2 by hemming welding. During the welding process, the welding seam portion 111 can be directly in contact with air for better heat dissipation, which can reduce the risk of stress concentration at the welding seam and avoid defects of weld shrinkage cracks, explosions and weld hole. Compared with the butt welding method in the prior art, the hemming welding has a wider weld width margin, which can increase the reliability of welding sealing and ultimately improve the helium detection yield of the sealing weld of the power battery.

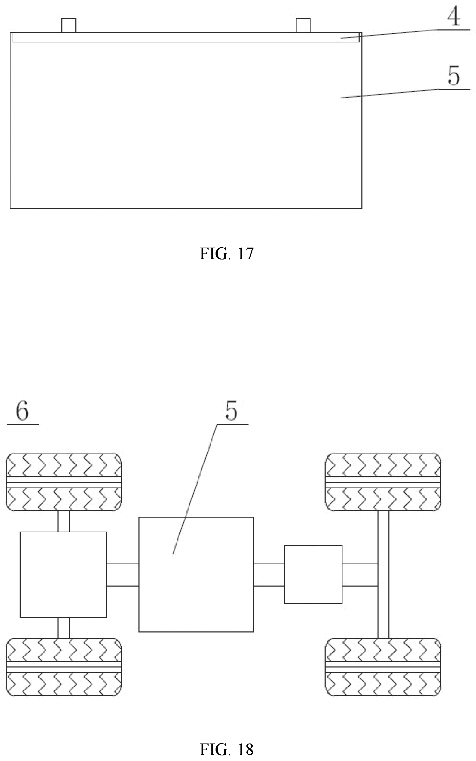

As shown in FIG. 17, an embodiment of the present disclosure further provides a battery 5, including the cover plate assembly 4 for a battery according to any one of the above embodiments, a battery housing and an battery cell. The cover plate assembly 4 is an important component of the battery 5, and the cover plate assembly 4 is covered on the battery housing to seal the battery housing, thereby forming a sealed cavity, with the battery cell mounted in the sealed cavity.

As shown in FIG. 18, an embodiment of the present disclosure further provides an electric apparatus 6, including the battery 5 according to the above embodiment.

The preferred embodiments of the present disclosure have been described in detail above with reference to the accompanying drawings, but the present disclosure is not limited thereto. Within the scope of the technical concept of the present disclosure, various simple modifications can be made to the technical solution of the present disclosure, including combining each specific technical feature in any suitable manner. In order to avoid unnecessary repetition, the present disclosure does not describe various possible combination manners separately. However, these simple modifications and combinations should also be regarded as the content disclosed by the present disclosure, and all fall within the protection scope of the present disclosure.

## Claims

1. A cover plate assembly for a battery, comprising:
a cover plate (2), a through hole (25) being formed on the cover plate (2);
a sealing cover (1), the sealing cover (1) being arranged on the cover plate (2) to block the through hole (25); the sealing cover (1) comprising a first bent portion (11), an lap joint portion (12) and a second bent portion (13), the first bent portion (11) being connected to the cover plate (2);
the lap joint portion (12) being located between the first bent portion (11) and the second bent portion (13), the first bent portion (11), the lap joint portion (12) and the second bent portion (13) being sequentially connected to form a recess, the width L of the lap joint portion (12) being not less than 0.5 mm and not greater than 1.5 mm.

2. The cover plate assembly for a battery according to claim 1, wherein the through hole (25) comprising:
a mounting groove (21);
a injection channel (22), the mounting groove (21) and the injection channel (22) being sequentially connected, the sealing cover (1) being mounted in the mounting groove (21).

3. The cover plate assembly for a battery according to claim 2, wherein the cover plate assembly further comprising:
a welding seam portion (111), the welding seam portion (111) being connected to the first bent portion (11) to connect the sealing cover (1) and the cover plate (2), a shortest distance between the welding seam portion (111) and an edge opposite to the second bent portion (13) being N3, and N3≥L.

4. The cover plate assembly for a battery according to claim 3, wherein a distance from a bottom of the welding seam portion (111) to an outer bottom surface of the lap joint portion (12) being N2, a thickness of the sealing cover (1) being t, and N2 and t satisfying 0.5t≤N2≤t.

5. The cover plate assembly for a battery according to claim 3, wherein a minimum distance from the welding seam portion (111) to an inner side wall of a corresponding side of the injection channel (22) being N1, and N1≥0.5 mm.

6. The cover plate assembly for a battery according to claim 3, wherein $N 3 = \left(h-t\right) * tan \left(γ/2\right) + L + \left(v-t\right) * tan \left(β\right) ⩾ 0.5 ;$ wherein h being a height of the first bent portion, t being a thickness of the sealing cover (1), γ being an inclined included angle between outer side surfaces of two opposite ends of the first bent portion, v being a distance from an upper surface of an avoiding portion to an outer bottom surface of the lap joint portion, and β being a bending angle of the second bent portion.

7. The cover plate assembly for a battery according to any one of claims 2 to 6, wherein a sealing nail (3) being sealingly mounted in the injection channel (22).

8. The cover plate assembly for a battery according to any one of claims 2 to 7, wherein a step structure (23) being arranged on an outer side of the injection channel (22), and a transition inclined surface (24) being arranged between the step structure (23) and a surface of the cover plate (2).

9. The cover plate assembly for a battery according to any one of claims 2 to 8, wherein the mounting groove (21) and the injection channel (22) being connected through a rounded transition.

10. The cover plate assembly for a battery according to any one of claims 1 to 9, wherein the second bent portion (13) being arc-shaped, and a radius R2 of an inner contour curved surface thereof being twice a radius R1 of an outer contour curved surface thereof.

11. The cover plate assembly for a battery according to any one of claims 1 to 10, wherein the sealing cover (1) further comprising:
an avoiding portion (14), the avoiding portion (14) protruding in a direction away from the through hole (25), the second bent portion (13) being arranged around the avoiding portion (14).

12. The cover plate assembly for a battery according to claim 11, wherein a projection of the avoiding portion (14) toward the through hole (25) at least partially overlapping with the through hole (25).

13. The cover plate assembly for a battery according to claim 11, wherein a distance between a side of the avoiding portion (14) toward the through hole (25) and a side of the lap joint portion toward the through hole (25) being not less than 0.5 mm and not greater than 4 mm.

14. The cover plate assembly for a battery according to any one of claims 1 to 13, wherein an inclined included angle between outer side surfaces of two opposite ends of the first bent portion (11) being γ, and 0°≤γ≤90°.

15. The cover plate assembly for a battery according to any one of claims 1 to 13, wherein the first bent portion (11) being arranged inclined toward an inner side wall of the through hole (25).

16. The cover plate assembly for a battery according to any one of claims 1 to 13, wherein the second bent portion (13) being arranged inclined in a direction away from the first bent portion (11).

17. The cover plate assembly for a battery according to any one of claims 1 to 13, wherein an outer bottom surface of the lap joint portion (12) being connected to the cover plate (2).

18. A battery, comprising the cover plate assembly (4) for a battery according to any one of claims 1 to 17, a battery housing and a battery cell, the cover plate assembly being covered on the battery housing to form a sealed cavity, the battery cell being located in the sealed cavity.

19. An electric apparatus, comprising the battery (5) according to claim 18.
